# EUROPÄISCHE PATENTSCHRIFT

(11) **EP 1 866 046 B1**
(45) Veröffentlichungstag und Bekanntmachung des Hinweises auf die Patenterteilung: **13.08.2008**
(21) Anmeldenummer: 06724019.2
(22) Anmeldetag: 05.04.2006
(51) Int. Cl.: B01D 19/00, A01J 11/04

(54) **VERFAHREN UND VORRICHTUNG ZUR ENTGASUNG UND AUFRECHTERHALTUNG EINES KONTINUIERLICHEN VOLUMENSTROMES EINER ZU BEHANDELNDEN MILCH IN EINER ULTRA-HOCH-TEMPERATUR (UHT) ANLAGE**
METHOD AND DEVICE FOR DEGASSING AND MAINTAINING A CONTINUOUS VOLUME FLOW OF MILK TO BE TREATED IN AN ULTRA-HIGH TEMPERATURE (UHT) INSTALLATION
PROCEDE ET DISPOSITIF POUR DEGAZER ET MAINTENIR LE DEBIT VOLUMETRIQUE CONTINU D'UN LAIT A TRAITER DANS UNE INSTALLATION A ULTRA HAUTE TEMPERATURE (UHT)

(30) Priorität: 06.04.2005 DE 102005015713
(43) Veröffentlichungstag der Anmeldung: 19.12.2007
(73) Patentinhaber: Tuchenhagen Dairy Systems GmbH, 31157 Sarstedt (DE)
(72) Erfinder: BUSS, Helmut, 46359 Heiden (DE); TACKE, Ludger, 46342 Velen (DE); SCHWENZOW, Uwe, 48683 Ahaus (DE)
(86) Internationale Anmeldenummer: PCT/EP2006/003064
(87) Internationale Veröffentlichungsnummer: WO 2006/105937

(56) Entgegenhaltungen:
- DE-A1- 10 315 351
- DE-C- 529 908
- US-A- 3 344 587

## Beschreibung

### TECHNISCHES GEBIET

Die Erfindung betrifft ein Verfahren zur Entgasung und Aufrechterhaltung eines kontinuierlichen Volumenstromes einer zu behandelnden Milch in einer Ultra-Hoch-Temperatur (UHT) Anlage mit indirekter Erhitzung und integriertem Separator für die Milchfettstandardisierung bei Bereitstellung von Rohmilch zur Behandlung in der UHT-Anlage und mit einer Zwischenspeicherung einer eine Anordnung mit Separator verlassenden standardisierten Milch sowie eine Vorrichtung zur Durchführung des Verfahrens mit einer der Zwischenspeicherung dienenden Zwischenspeichervorrichtung.

### STAND DER TECHNIK

In sog. UHT-Anlagen wird die zu behandelnde Milch entweder in Form einer pasteurisierten und auf einen ganz bestimmten Fettgehalt eingestellten Milch (sog. standardisierte Milch) oder als Rohmilch bereitgestellt. Im Falle des Einsatzes von Rohmilch ist in einer Vorwärmzone der UHT-Anlage ein Separator integriert, mit dem die Rohmilch in die Fraktionen Rahm und Magermilch getrennt wird. In einer dem Separator nachgeschalteten Einrichtung zur sog. Milchfettstandardisierung wird ein exakt einzustellender Teilstrom des Rahmes der Magermilch zugeführt, sodass der gewünschte Milchfettgehalt in der UHT-Milch erreicht wird. Der bei der sog. Standardisierung nicht Verwendung findende Rest des Rahmes verlässt als Überschussrahm den Separator.

In mit Rohmilch beschickten UHT-Anlagen, die die Integration eines Separates in der vorstehend beschriebenen Weise erforderlich machen, muss der Separator in bestimmten Zeitabständen entschlammt werden. Dieses Entschlammen erfolgt in der Regel automatisch und bedingt eine kurzzeitige Unterbrechung der Separierung. Dabei zieht der Separator ein wenig Luft mit ein, die in der zu behandelnden Milch Aufnahme finden kann. Die Beladungsfähigkeit der Milch mit Luft bzw. Luftsauerstoff ist bekanntlich unter anderem auch von deren Fettgehalt abhängig, wobei in den UHT-Anlagen beispielsweise Magermilch oder standardisierte Milch mit einem Fettgehalt zwischen 1,5 und 3,5 % behandelt wird.

Es hat sich für die Standzeit der UHT-Anlagen mit indirekter Erhitzung als vorteilhaft erwiesen, wenn der Luftgehalt unterhalb von 8 mg Luft/dm³ Milch liegt. Oberhalb eines diesbezüglichen Grenzwertes besteht die erhöhte Gefahr des Anbrennens, insbesondere in den Wärmeaustauschern der Erhitzerzone und des Heißhalters, wodurch die Standzeit dieser Wärmeaustauscher signifikant verkürzt wird.

Neben der vorstehend kurz beschriebenen Unterbrechung der Separierung infolge des automatischen Abschlammens und der damit verbundenen Gefahr einer verstärkten Luft- bzw. Luftsauerstoff-Aufnahme der Milch muss dafür Sorge getragen werden, dass während dieser Unterbrechungszeit die nachgeordnete UHT-Anlage kontinuierlich mit der zu behandelnden standardisierten Milch beschickt wird. Dies geschieht dadurch, dass, in Strömungsrichtung gesehen, der Anordnung mit Separator eine Zwischenspeicherung für diese Milch nachgeschaltet ist. In einer sog. Zwischenspeichervorrichtung wird so viel standardisierte Milch vorgelegt, dass über die Zeit der ablaufbedingten Unterbrechung der erforderliche Volumenstrom an Milch aus dieser Zwischenspeichervorrichtung entnommen werden kann. Diese Speichermöglichkeit ist ebenfalls bei Einfahr- und Abfahrvorgängen erforderlich. Die derart zwischengespeicherte standardisierte Milch hat etwa eine Temperatur von 55 Grad Celsius und es besteht bei dieser Temperatur und einer aufgrund der Leistungsdaten in der Zwischenspeichervorrichtung vorliegenden sog. mittleren Verweilzeit τ, die sich aus einem jeweiligen Speichervolumen V und einem Volumenstrom Q nach der Beziehung τ = V/Q ergibt, die Gefahr eines unkontrollierten Keimwachstums.

Dies resultiert insbesondere aus der Tatsache, dass die bislang bekannt gewordenen Zwischenspeichervorrichtungen zwar eine rechnerisch bestimmbare mittlere Verweilzeit τ liefern, die praktisch jedoch für bestimmte Flüssigkeitsfraktionen entsprechend dem an sich in diesen Speichern eher wirksamen Rührkesselverhalten sehr stark von diesem rechnerischen Mittelwert abweichen kann. Eine längere tatsächliche Verweilzeit einzelner Flüssigkeitsfraktionen in der Zwischenspeichervorrichtung bei einer Temperatur von etwa 55 Grad Celsius kann in diesen unter den vorg. Bedingungen zu verstärktem und unkontrolliertem Keimwachstum führen, während beispielsweise eine höhere Temperatur in Verbindung mit der jeweiligen tatsächlichen Verweilzeit zu einer Beeinträchtigung der Produktqualität führen kann.

Die Erkenntnis, dass die in Rede stehende Zwischenspeichervorrichtung durch die ihr innewohnende undefinierte Verweilzeit der durchgesetzten Flüssigkeitsfraktionen während der Zwischenlagerung von Produkt bei einer Temperatur von 55 Grad Celsius bakteriologisches Keimwachstum begünstigen kann, hat in der Druckschrift DE 103 15 351 A1 zu dem Vorschlag geführt, eine derartige Zwischenspeichervorrichtung mit Fördermitteln zur Förderung von gespeicherter Flüssigkeit derart zu steuern, dass in Abhängigkeit von ablaufbedingten Unterbrechungen des Volumenstromes in einem Anlagenteil ein Befüllen eines leeren Ausgleichsbehälters erst bei Bedarf erfolgt und nach Rückförderung des Ausgleichsvolumens in die Anlage eine vollständige Entleerung des Ausgleichsbehälters vorgenommen wird.

Aus einer derartigen Lösung resultiert der Tatbestand, dass die sowohl zeitlich als auch mengenmäßig direkt am Bedarf orientierte Befüllung des Ausgleichsbehälters eine minimale mittlere Verweildauer des Ausgleichsvolumens im Ausgleichsbehälter zur Folge hat. Durch die jeweils vollständige Entleerung gibt es ferner kein Volumen, welches möglicherweise langfristig im Ausgleichsbehälter verbleibt. Die bekannte Lösung minimiert zwar die mittlere Verweilzeit, sie kann jedoch nicht sicherstellen, dass sämtliche über die Zeitdauer der Speicherung in den Ausgleichsbehälter geförderten Flüssigkeitsfraktionen nur für die Zeitdauer dieser rechnerischen mittleren Verweilzeit im Ausgleichsbehälter verbleiben. Es ist durchaus möglich, dass zuletzt in den Ausgleichsbehälter geförderte Flüssigkeitsfraktionen unmittelbar danach den Ausgleichsbehälter wieder verlassen und zu Beginn des Speichervorganges in den Ausgleichsbehälter eingeleitete Flüssigkeitsfraktionen bis zur vollständigen Entleerung desselben dort verbleiben. Mit Sicherheit kann nur festgestellt werden, dass keine Flüssigkeitsfraktion länger als eine Zeitspanne im Ausgleichsbehälter verbleibt, die sich aus der gesamten Zeitdauer des Speichervorganges zwischen Beginn der Befüllung und vollständiger Entleerung ergibt. Das mit Blick auf eine möglichst gleiche Verweilzeit für alle am Speichervorgang beteiligten Flüssigkeitsfraktionen zu realisierende Prinzip des "first-in = first-out" wird durch die bekannte Zwischenspeichervorrichtung nicht erfüllt, sodass unter der Prämisse einer an sich verkürzten mittleren Verweilzeit die tatsächliche Verweilzeit der jeweiligen Flüssigkeitsfraktionen nach wie vor undefiniert bleibt.

Darüber hinaus kann die Zwischenspeichervorrichtung für Lebensmittelbehandlungsanlagen gemäß DE 103 15 351 A1 keinen nennenswerten Beitrag zur Entgasung der gespeicherten Flüssigkeit leisten, der über jenen von Speichervorrichtungen hinausgeht, wie sie bislang auch Stand der Technik sind.

In der US 3 344 587 A ist eine Vorrichtung zur Abscheidung von Luft aus Flüssigkeiten oder Flüssigkeitsgemischen, beispielsweise Milch, Lebensmittelgemischen oder ähnliches beschrieben, die im allgemeinen aus einem vertikal angeordneten, geschlossenen zylindrischen Tank besteht, der in seinem Boden- und Kopfbereich jeweils einen nach außen gewölbten Behälterteil aufweist. Im Innern des Tanks ist ein zur Längsachse des Tanks konzentrisch angeordneter Zylindermantel vorgesehen, der stirnseitig jeweils offen ist und normalerweise an seinem unteren Ende auf dem gewölbten, den Tankboden bildenden Behälterteil längs einer ringförmigen Linie aufsitzt und der an seinem oberen Ende bis in den Kopfbereich des Tanks eingreift. Der im Innern des Tanks angeordnete Zylindermantel bildet somit mit der inneren Mantelfläche des Tanks im allgemeinen einen Ringraum, der an seinem unteren Ende einen radial nach außen orientierten Rohranschluss aufweist, über den Flüssigkeit punktuell abgeführt werden kann. Der Tankboden wird zentrisch von einer Rohrleitung durchdrungen, die von unten an den Tank herangeführt ist und ein Stück weit in den Bodenbereich des Tanks eingreift. Das Ende der in den Tank eingreifenden Rohrleitung ist mit einem Deckel verschlossen und der Mantelteil der eingreifenden Rohrleitung weist eine Vielzahl über den Umfang verteilte Öffnungen auf. Das den Behälterkopf bildende Behälterteil besitzt eine zentrisch angeordnete, in einem Flansch endende Öffnung, die mit einem Deckel verschlossen ist. Im Deckel sind Mittel zur Ent- und Belüftung des Tanks angeordnet. Im Bereich des oberen Endes des im Tank angeordneten Zylindermantels ist vorzugsweise zentrisch ein Schwimmer angeordnet, der über eine vertikale Stange die Mittel zur Entlüftung steuert.

Im stationären Betrieb der Vorrichtung befindet sich in dieser eine zu entgasende Flüssigkeit der vorbeschriebenen Art, deren freie Flüssigkeitsoberfläche ein Stück oberhalb des oberen Endes des im Tank angeordneten Zylindermantels endet. Die Flüssigkeit strömt dem Tank über die vorbeschriebene Rohrleitung im Tankboden zu, verteilt sich über den inneren Durchtrittsquerschnitt des Zylindermantels und durchströmt letzteren von unten nach oben. Am oberen Ende des Zylindermantels wird die Flüssigkeit radial nach außen umgelenkt und durchströmt anschließend den Ringraum zwischen Zylindermantel und innerer Mantelfläche des Tanks von oben nach unten.

In der Flüssigkeit enthaltene Luftblasen werden, unterstützt vom Auftrieb im Schwerefeld, im Zylindermantel axial nach oben transportiert und, sofern sie nicht von der radial umgelenkten Strömung in den Ringraum abwärts mitgerissen werden, über die freie Flüssigkeitsoberfläche in den darüber befindlichen Gasraum abgeschieden. Luftblasen, die sich einmal in der abwärts gerichteten Strömung des Ringraums befinden, haben insbesondere in hochviskosen Flüssigkeiten in der Regel keine Möglichkeit mehr, durch den im Ringraum wirkenden Auftrieb in den Gasraum abgeschieden zu werden.

Aus der DE 529 908 C ist eine Absaugregulierung an Vakuumentgasern für Milch und Rahm bekannt, wobei die zu entgasende Flüssigkeit dem Kopfraum des Vakuumentgasers zentral zugeführt und von dort aus über einen sich über den gesamten Querschnitt und bis zum Behältermantel des Vakuumentgasers erstreckenden Verteilerschirm verteilt wird. Der oberhalb des Verteilerschirms angeordnete Kopfraum des Vakuumentgasers, der quasi auch als Zwischenboden fungiert, wird über eine Luftpumpe evakuiert. Der Verteilerschirm ist zum Behältermantel hin stetig abfallend ausgeführt und leitet die Flüssigkeit über seinen gesamten äußeren Umfang unmittelbar auf den Behältermantel, der sich nach unten kegelstumpfförmig verjüngt. Die Flüssigkeit rieselt am Behältermantel herab, sammelt sich im Bodenbereich des Vakuumentgasers und wird dort am tiefsten Punkt und zentral fortlaufend abgesaugt, wobei das Flüssigkeitsniveau über einen Schwimmer gesteuert wird.

Bei dem bekannten Vakuumentgaser sind die strömungsmechanischen Bedingungen zur Entbindung und Freisetzung der Gasblasen aus der zu behandelnden Flüssigkeit nicht hinreichend günstig. Dies resultiert insbesondere aus der dort vorgeschlagenen Einleitung der zu behandelnden Flüssigkeit in den Behälter, deren Ableitung von dem Verteilerschirm unmittelbar auf den Behältermantel und deren Transport über eine relativ große Fallhöhe auf dem Weg über den abwärts gerichteten Behältermantel sowie aus der flächenmäßig eng begrenzten Aufschichtung und Einbringung in die sich im Bodenbereich des Vakuumentgasers sammelnde Flüssigkeit. Die aus der strömungsmechanischen Behandlung der zu entgasenden Flüssigkeit resultierenden Nachteile werden durch die Evakuierung der gesamten Anordnung, die die Entgasung signifikanter als die strömungsmechanischen Wirkmechanismen begünstigt, mehr als kompensiert. Die Möglichkeit der Evakuierung einer Entgasungs- und Speichervorrichtung ist jedoch aus technischen Gründen und/oder Kostengründen bei UHT-Anlagen nicht möglich bzw. vertretbar.

Es ist Aufgabe der vorliegenden Erfindung, ein Verfahren der gattungsgemäßen Art und eine Vorrichtung zu seiner Durchführung zu schaffen, mit denen die zu behandelnde Milch kontinuierlich entgast und über eine für alle Flüssigkeitsfraktionen weitestgehend gleiche Verweilzeit zwischengespeichert wird.

### ZUSAMMENFASSUNG DER ERFINDUNG

Diese Aufgabe wird durch ein Verfahren mit den Merkmalen des Anspruchs 1 gelöst. Eine Vorrichtung zur Durchführung des Verfahrens ist durch die Merkmale des Nebenanspruchs 6 gekennzeichnet. Vorteilhafte Ausführungsformen des vorgeschlagenen Verfahrens und der Vorrichtung sind Gegenstand der jeweiligen Unteransprüche.

Ein erster grundlegender erfinderischer Gedanke besteht darin, dass bei stationärer Separierung im Separator, d.h. im normalen Separationsbetrieb ohne ablaufbedingte Unterbrechungen, der Volumenstrom fortdauernd über die gesamte Zeitdauer der stationären Separierung in einer der Anordnung mit Separator nachgeordneten Entgasungs- und Speichervorrichtung eine Behandlung nach den nachfolgendend im Einzelnen noch dargestellten Schritten erfährt. Hier besteht ein erster Unterschied zur Zwischenspeichervorrichtung und deren Betrieb gemäß DE 103 15 351 A1, bei der ein Befüllen des leeren Ausgleichsbehälters erst bei Bedarf erfolgt.

Im Falle einer ablaufbedingten Unterbrechung der Separierung, beispielsweise durch Entschlammung des Separators, sieht die erfindungsgemäße Lösung vor, dass der Volumenstrom aus dem Speichervolumen entnommen wird.

Um eine kontinuierliche Entgasung der zu behandelnden Milch zu erreichen, wird gemäß einem ersten Verfahrensschritt der Volumenstrom der Entgasungs- und Speichervorrichtung vertikal, von unten nach oben, zugeführt. Durch eine derartige Zuführung, die gleichgerichtet zu einem schwerkraftbedingt wirksamen Gasblasenauftrieb erfolgt, wird am ehesten ein Eintrag der Gasblasen zusammen mit der diese aufnehmenden Milch in den Entgasungs- und Speicherbehälter, wo die Abscheidung der Gasblasen forciert werden kann, sichergestellt.

In einem sich anschließenden zweiten Verfahrensschritt wird mit dem Volumenstrom eine punktsymmetrisch, radial gesehen, von innen nach außen zunächst sich waagerecht und anschließend auf radialem Weg geringfügig abfallend ausbreitende Filmströmung erzeugt. Durch die Ausbildung der Strömung in Form eines dünnen Filmes sind die jeweiligen Abscheidewege der in der zu behandelnden Milch gelösten Gasblasen relativ kurz, sodass die schwerkraftbedingte Abscheidung infolge Auftrieb allein durch diesen Sachverhalt begünstigt wird.

Die Generierung der Filmströmung erfolgt in einem weiteren Schritt auf gleicher oder annähernd gleicher Höhe mit einer Oberfläche eines Speichervolumens in der Entgasungs- und Speichervorrichtung, und die Filmströmung wird auf einen großen Teil dieser Oberfläche, in radialer Richtung gesehen, von innen nach außen aufgeschichtet. Durch diese Maßnahmen werden ggf. noch in der Filmströmung enthaltene kleine Gasblasen weder weiter zerkleinert noch ggf. in der Flüssigkeit emulgiert. Diese vorteilhafte Behandlung wird insbesondere dadurch erreicht, dass auf einen aus dem Stand der Technik bekannten relativ großen Strömungsweg längs des im Wesentlichen vertikal verlaufenden Behältermantels zwischen der Generierung der Filmströmung und deren Eintrag in den Flüssigkeitsvorrat der Entgasungs- und Speichervorrichtung verzichtet wird.

Darüber hinaus werden durch den Ort der Generierung der Filmströmung und deren behutsame Aufschichtung auf die Oberfläche Voraussetzungen geschaffen, um im Speichervolumen, wie dies ein sich anschließender weiterer Verfahrensschritt vorsieht, eine entgegen einem Gasblasenauftrieb orientierte, über den Querschnitt des Speichervolumens annähernd gleichverteilte Kolbenströmung zu erzeugen. Schließlich wird in einem letzten Schritt der Volumenstrom dem Speichervolumen am unteren Ende zentral und gleichgerichtet zur Kolbenströmung entnommen.

In den letzten vier Verfahrensschritten der das erfindungsgemäße Verfahren insgesamt kennzeichnenden fünf Verfahrensschritte unterscheidet sich das erfindungsgemäße Verfahren von einem Verfahren, wie es mit der bekannten Vorrichtung gemäß US 3 344 587 A durchführbar ist.

Mit der weitestgehenden Verwirklichung einer Kolbenströmung im Speichervolumen wird die Realisierung des vorstehend bereits erwähnten "first-in = first-out"-Prinzips erreicht, was bedeutet, dass jene Flüssigkeitsfraktionen, die zuerst in die Entgasungs- und Speichervorrichtung eintreten, auch diese zuerst verlassen. Durch die Verwirklichung einer Kolbenströmung im Speichervolumen arbeitet die Entgasungs- und Speichervorrichtung in diesem Bereich wie ein in der chemischen Reaktionstechnik als sog. Strömungsrohr bezeichneter Reaktor. In einem derartigen Strömungsrohr besitzt der überwiegende Teil des dieses durchsetzenden Fluids annähernd gleiche Verweilzeit, sodass dieses Verweilzeitverhalten sich deutlich von jenem für Zwischenspeichervorrichtungen nach dem Stand der Technik unterscheidet, die eher ein sog. Rührkesselverhalten besitzen. In einem Rührkessel besitzen bekanntlich alle beteiligten Flüssigkeitsfraktionen rechnerisch eine sog. mittlere Verweilzeit, die sich aus dem Rührkesselvolumen V und dem Volumenstrom (Durchsatz) Q nach der Formel τ = V/Q errechnet, wobei jedoch einzelne Flüssigkeitsfraktionen sehr viel kürzer und andere sehr viel länger als die mittlere Verweilzeit im jeweiligen Rührkesselvolumen verbleiben können.

Für den Fall, dass die UHT-Anlage über einen längeren Zeitraum mit einer unveränderlichen Leistung betrieben wird, d.h. wenn beispielsweise über eine größere Charge mit einem konstanten Volumenstrom und einer Standardfettsorte gearbeitet werden kann, wird erfindungsgemäß vorgeschlagen, dass das Speichervolumen ein festes, vorgegebenes Speichervolumen mit höhenunveränderlicher oder annähernd höhenunveränderlicher Oberfläche ist. In diesem Falle wird die Filmströmung in der Höhe dieser im Wesentlichen höhenunveränderlichen Oberfläche generiert und auch dort jeweils auf diese ortsfeste Oberfläche nach Maßgabe der vorgenannten diesbezüglichen Verfahrensmerkmale aufgeschichtet.

Bei Einfahr-, Anfahr- oder Abfahrvorgängen ist zwangsläufig der Volumenstrom nicht konstant, sodass sich bei Durchsatzschwankungen in diesen instationären Betriebszuständen bei gleichzeitig festem Speichervolumen eine veränderliche Verweilzeit in der Entgasungs- und Speichervorrichtung einstellen würde. Ist es darüber hinaus erforderlich, unterschiedliche Standardfettsorten in wechselnder Abfolge zu verarbeiten, die bekanntlich die Beladungsfähigkeit der Milch mit Luft bzw. Luftsauerstoff beeinflussen, sodass allein unter diesem Gesichtspunkt eine jeweilige Anpassung der mittleren Verweilzeit in der Entgasungs- und Speichervorrichtung angezeigt ist, dann wird eine optimale Anpassung an die vorgenannten unterschiedlichen Parameter dadurch verfahrenstechnisch sichergestellt, wie dies ein weiterer Vorschlag vorsieht, dass das Speichervolumen ein variables, jeweils vorgegebenes Speichervolumen mit entsprechend höhenveränderlicher Oberfläche ist. Durch ein variables, jeweils vorgegebenes Speichervolumen kann die mittlere Verweilzeit auf die jeweiligen gegebenen Bedingungen optimal eingestellt werden. Das variable Speichervolumen bedingt erfindungsgemäß auch, dass die Filmströmung in der Höhe der jeweiligen Oberfläche dieses variablen Speichervolumens generiert und dort auf diese Oberfläche nach Maßgabe der vorstehend beschriebenen diesbezüglichen Verfahrensmerkmale aufgeschichtet wird. Dies ist insbesondere in der Phase der Befüllung des Speichervolumens im Anschluss an eine ablaufbedingte Unterbrechung der Separierung von Vorteil, da der Ort der Generierung der Filmströmung und der Ort ihrer Aufschichtung praktisch zusammen fallen.

Gemäß einem weiteren Vorschlag wird die Anpassung und Einstellung der jeweils erforderlichen mittleren Verweilzeit der zu behandelnden Milch in der Entgasungs-und Speichervorrichtung dadurch erreicht, dass das das jeweilige Speichervolumen abbildende Niveau erfasst und durch Steuerung eingestellt und aufrechterhalten wird.

Damit bei ablaufbedingten Unterbrechungen der Separierung die UHT-Anlage jederzeit kontinuierlich mit dem erforderlichen Volumenstrom versorgt werden kann, sieht eine weitere Ausgestaltung des vorgeschlagenen Verfahrens gemäß der Erfindung vor, dass nach einer Wiederaufnahme der Separierung im Anschluss an deren ablaufbedingte Unterbrechung eine Befüllung auf das vorgegebene feste Speichervolumen oder das vorgegebene variable Speichervolumen erfolgt.

Zur Lösung der gestellten Aufgabe schlägt die Erfindung weiterhin eine Entgasungs- und Speichervorrichtung vor, die in einer UHT-Anlage mit indirekter Erhitzung und integriertem Separator für die Milchfettstandardisierung dort der Anordnung mit Separator nachgeordnet ist und die an ihrem unteren Ende einen zentralen Ablaufstutzen aufweist, der von einem von unten in einen Ausgleichsbehälter der Entgasungs- und Speichervorrichtung eingreifenden Zulaufrohr konzentrisch durchdrungen wird. Dieses Zulaufrohr stellt eine Verbindung mit einem Umfangsringspalt her, der zwischen einem Verteilerschirm und einer zu letzterem oberhalb beabstandeten und konzentrisch angeordneten, in den flächigen Abmessungen kleineren Prallplatte gebildet wird. Der Verteilerschirm erstreckt sich quer zur Längsachse der Entgasungs- und Speichervorrichtung anfangs waagerecht und anschließend auf radialem Weg geringfügig abfallend und er endet außenseits auf gleicher oder annähernd gleicher Höhe mit einem ein Speichervolumen in der Entgasungs- und Speichervorrichtung abbildenden Niveau.

Gemäß einem weiteren Vorschlag endet der äußere Rand des Verteilerschirms umfangsseits mit einem radialen Abstand von einem Behältermantel des Ausgleichsbehälters, sodass die Filmströmung auf einen großen Teil dieses Niveaus bzw. dieser Oberfläche, in radialer Richtung gesehen, von innen nach außen behutsam aufgeschichtet werden kann.

Unter der Bedingung, dass eine größere Charge Milch in der UHT-Anlage mit einem bestimmten Standardfettgehalt bei einer bestimmten festen Durchsatzleistung zu behandeln ist, wird gemäß einer vorteilhaften ersten Ausführungsform vorgeschlagen, dass der Verteilerschirm an einem Ende des in den Ausgleichsbehälter hineingeführten Zulaufrohres mit diesem dergestalt fest verbunden ist, dass das Zulaufrohr zentrisch in den Verteilerschirm und oberhalb desselben und bündig mit diesem ausmündet. Durch den fest angeordneten Verteilerschirm wird die erforderliche Filmströmung in einer unveränderlichen Höhe generiert und auch dort auf die feste, höhenunveränderliche Oberfläche des Speichervolumens aufgeschichtet. Aus dieser Anordnung ergibt sich eine konstruktiv relativ einfache Vorrichtung.

Falls eine optimale Anpassung der mittleren Verweilzeit an unterschiedliche Betriebsbedingungen (An- und Abfahrvorgänge; unterschiedlich große Chargen von zu behandelnder Milch; unterschiedliche Durchsatzleistungen) und Standardfettsorten gewünscht oder erforderlich ist, sieht ein weiterer Vorschlag gemäß der Erfindung vor, dass der Verteilerschirm an einer Oberseite eines Schwimmerkörpers ausgebildet ist, der durch seinen Auftrieb in dem variablen Speichervolumen getragen wird, dass der Schwimmerkörper koaxial von dem Zulaufrohr durchdrungen und dass er axial verschieblich auf letzterem gelagert ist. Durch diese Anordnung befindet sich der Verteilerschirm stets in einer optimalen Lage zur jeweiligen Oberfläche des variablen Speichervolumens, sodass die Filmströmung immer in der jeweiligen Höhe dieser Oberfläche generiert und dort auf diese Oberfläche aufgeschichtet werden kann. Die Bedingungen für die geometrische Gestaltung der Filmströmung sowie für die Erzeugung der Kolbenströmung unterhalb des Verteilerschirmes bleiben durch diese zweite Ausführungsform unverändert.

Um die wenigstens eine Lagerstelle für den Schwimmerkörper einer gezielten Reinigung zu unterziehen, sieht eine weitere Ausführungsform der Vorrichtung gemäß der Erfindung vor, dass das Zulaufrohr in einem an der Oberseite des Schwimmerkörpers unmittelbar oder mittelbar angeordneten zylinderförmigen Gehäuse endet, dort wenigstens eine erste Lagerstelle für den Schwimmerkörper aufweist, und dass in dem Gehäuse ein Sprühkopf angeordnet ist, der mit einem aus der Umgebung der Entgasungs- und Speichervorrichtung herangeführten Reinigungsrohr verbunden und von dort mit Reinigungsmittel zu versorgen ist.

Die erfindungsgemäße Vorrichtung gestaltet sich konstruktiv dann besonders einfach, wenn der Verteilerschirm und die jeweils korrespondierende Prallplatte kreisförmig und in Form eines Schirmes ausgeführt sind.

Die Ausbildung einer wünschenswerten Kolbenströmung im Speichervolumen der Entgasungs- und Speichervorrichtung wird, wie dies ein weiterer Vorschlag vorsieht, dadurch begünstigt und in besonderer Weise befördert, dass ein Behältermantel des Ausgleichsbehälters rohrförmig ist. Diesbezüglich sieht ein weiterer Vorschlag vor, dass das Speichervolumen zylinderförmig gestaltet und mit einer Höhe ausgeführt ist, die größer als ein Durchmesser des Speichervolumens ist. In diesem Zusammenhang wird weiter vorgeschlagen, die Höhe wenigstens zweifach größer als den Durchmesser auszuführen. Die letztgenannte Ausführungsform strebt für eine behältermäßige Ausgestaltung des Speichervolumens näherungsweise die Verweilzeitcharakteristik an, wie sie einer rohrförmigen Ausgestaltung des Behältermantels an sich innewohnt.

Um das Niveau und damit das jeweils vorzusehende Speichervolumen in der Entgasungs- und Speichervorrichtung zu erfassen und zu steuern, wird weiterhin vorgeschlagen, in dieser eine Niveaumesseinrichtung anzuordnen.

### KURZBESCHREIBUNG DER ZEICHNUNGEN

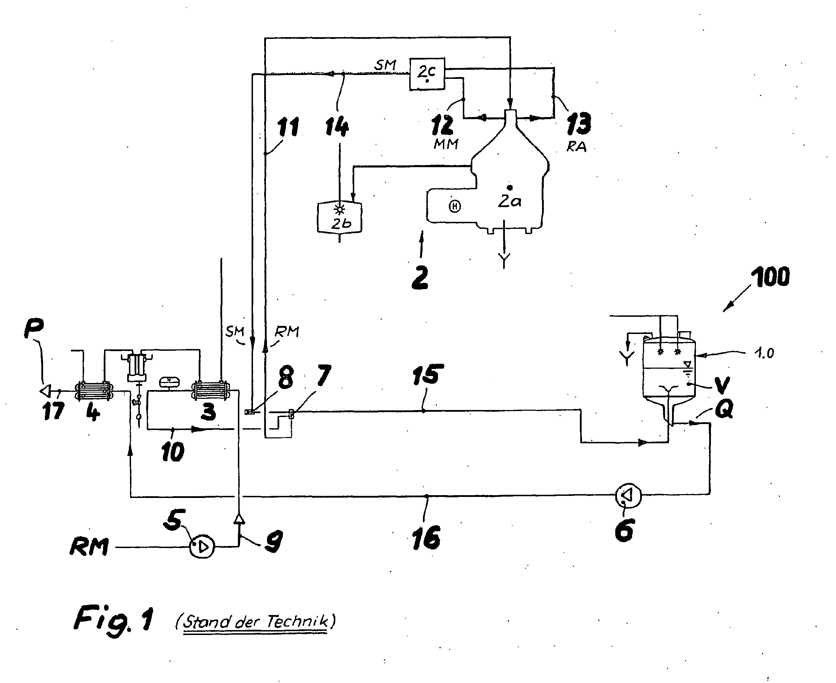

Ausgehend vom Stand der Technik zeigt
- **Figur 1**: in schematischer und vereinfachter Darstellung einen ersten Teil einer Ultra-Hoch-Temperatur (UHT) Anlage mit indirekter Erhitzung im Bereich der Vorwärmzone und integriertem Separator für die Milchfettstandardisierung bei Bereitstellung von Rohmilch zur Behandlung in der UHT-Anlage, wobei einer Anordnung mit Separator eine Zwischenspeichervorrichtung nachgeordnet ist und sich die Darstellung der UHT-Anlage auf die wesentlichen, mit Milch beaufschlagten Anlagenteile beschränkt.

Dieser Stand der Technik wird nachfolgend einleitend erläutert.

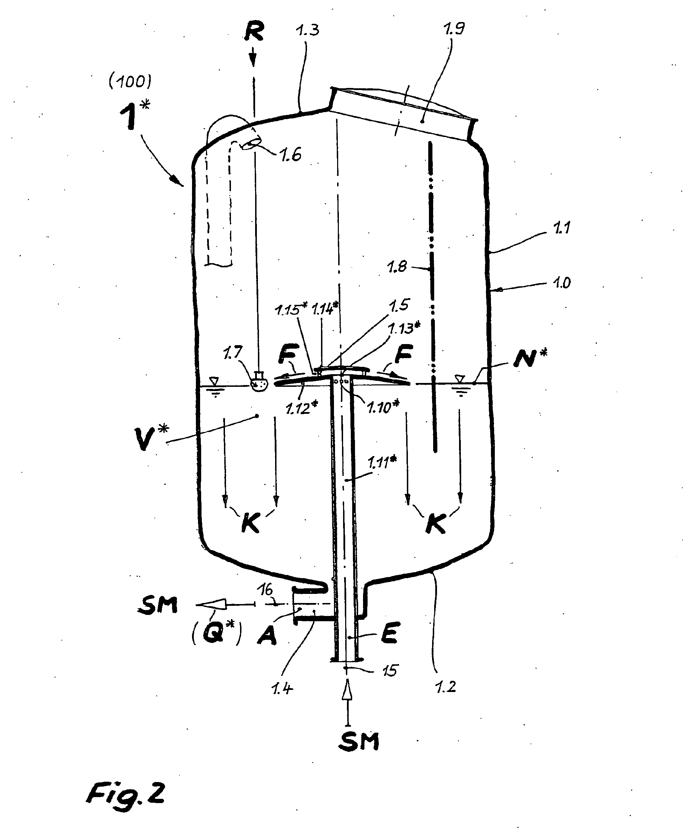

Zwei Ausführungsbeispiele der vorgeschlagenen Vorrichtung gemäß der Erfindung sind in den weiteren Figuren der Zeichnung dargestellt und werden nachfolgend beschrieben. Es zeigen
- **Figur 2**: in schematischer Darstellung einen Mittelschnitt durch eine erste Ausführungsform der Vorrichtung gemäß der Erfindung, wobei in dieser ein festes, vorgegebenes Speichervolumen mit annähernd höhenunveränderlicher Oberfläche vorgesehen ist und

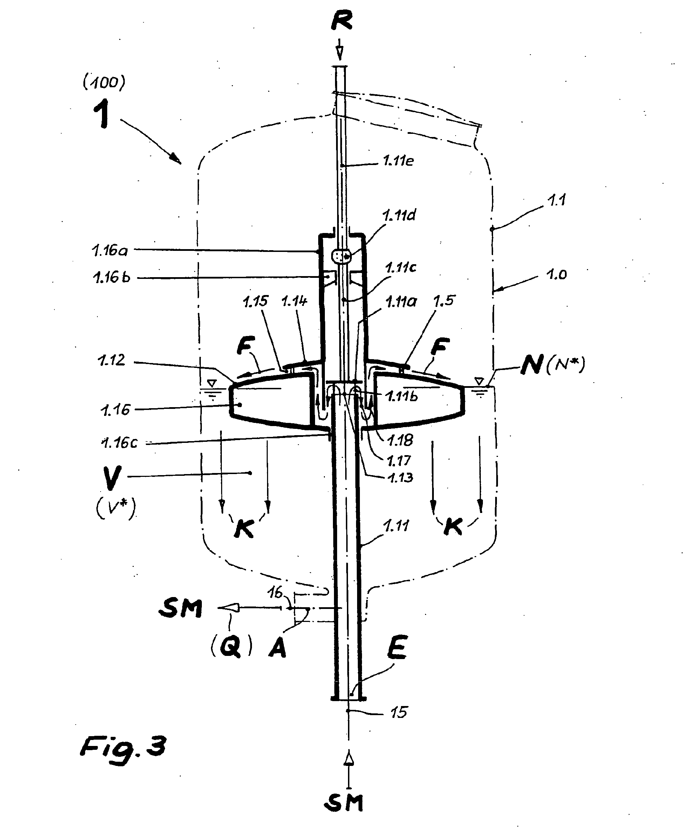

- **Figur 3**: gleichfalls in schematischer Darstellung einen Mittelschnitt durch eine zweite Ausführungsform der Vorrichtung gemäß der Erfindung, wobei in dieser ein variables, jeweils vorgegebenes Speichervolumen mit entsprechend höhenveränderlicher Oberfläche vorgesehen ist und diese Oberfläche über einen Schwimmerkörper, an dessen Oberkörperseite ein Verteilerschirm ausgebildet ist, erfasst und abgebildet ist.

### DETAILLIERTE BESCHREIBUNG

**Figur 1** (Stand der Technik) zeigt einen Teil einer sog. Ultra-Hoch-Temperatur (UHT) Anlage mit indirekter Erhitzung und integriertem Separator für die Milchfettstandardisierung, wenn Rohmilch RM zur Behandlung in der UHT-Anlage bereitgestellt wird, wobei eine Zwischenspeichervorrichtung 100 mit einem Ausgleichsbehälter 1.0 zwischen vorgeschalteten Anlagenteilen 3 und nachgeschalteten Anlagenteilen 4 angeordnet ist. Bei den Anlagenteilen 3 und 4 handelt es sich im vorliegenden Falle um jeweils einen Wärmeaustauscher der Vorwärmzone, wobei im ersten Wärmeaustauscher 3 eine Vorwärmung der Rohmilch RM auf ca. 55 Grad Celsius stattfindet. Die Rohmilch RM wird über eine vorgeschaltete Fördereinrichtung 5 auf dem Weg über einen vorgeordneten Leitungsabschnitt 9 dem ersten Wärmeaustauscher 3 zugeführt. Von dort gelangt sie über einen ersten Leitungsabschnitt 10 und ein Umschaltventil 7 in einen zweiten Leitungsabschnitt 11, der in einen Separator 2a einer Anordnung mit Separator 2 führt.

Im Separator 2a erfolgt eine Separierung der Rohmilch RM in die Fraktionen Magermilch MM und Rahm RA . Letztere werden über einen dritten Leitungsabschnitt 12 bzw. einen vierten Leitungsabschnitt 13 einer Einrichtung zur Milchfettstandardisierung 2c zugeführt, in der eine Milch mit einem vorgegebenen Fettgehalt, eine sog. standardisierte Milch SM, hergestellt wird. Der bei der sog. Standardisierung nicht Verwendung findende Rest des Rahmes RA verlässt als Überschussrahm den Separator 2a. Die standardisierte Milch SM gelangt über einen fünften Leitungsabschnitt 14 auf dem Weg über ein Absperrventil 8 und das vorerwähnte Umschaltventil 7 zu einem sechsten Leitungsabschnitt 15, der in der Zwischenspeichervorrichtung 100 endet.

In der Zwischenspeichervorrichtung 100 wird so viel standardisierte Milch SM zwischengespeichert, wie für die ablaufbedingte Unterbrechung der Separierung in der Anordnung mit Separator 2, beispielsweise durch Entschlammen des Separators 2a in einen Schlammbehälter 2b, zur Aufrechterhaltung eines kontinuierlichen Volumenstromes Q in dem nachgeschalteten Anlagenteil 4 der UHT-Anlage, dem zweiten Wärmeaustauscher, erforderlich ist. Die Zwischenspeichervorrichtung 100 ist ausgangsseitig über einen siebten Leitungsabschnitt 16, in dem eine nachgeschaltete Fördereinrichtung 6 angeordnet ist, mit dem zweiten Wärmeaustauscher 4 verbunden. Die in dem zweiten Wärmeaustauscher 4 weiter vorerwärmte standardisierte Milch SM verlässt letzteren über einen nachgeordneten Leitungsabschnitt 17 als Zwischenprodukt P.

Mit dem Umschaltventil 7 ist in Verbindung mit dem Absperrventil 8 eine zur vorstehend beschriebenen Strömungsführung alternative Strömungsführung unter Ausschluss der Anordnung mit Separator 2 möglich, nämlich ausgehend von dem ersten Leitungsabschnitt 10 über das Umschaltventil 7 unmittelbar in den sechsten Leitungsabschnitt 15. Eine derartige Strömungsführung erlaubt die Behandlung einer pasteurisierten und auf einen ganz bestimmten Fettgehalt eingestellten Milch an Stelle der vorstehend angegebenen Rohmilch RM.

Die Zwischenspeichervorrichtung 100 hat die Aufgabe, bei ablaufbedingter Unterbrechung der Separierung in der Anordnung mit Separator 2 durch Bereitstellung eines in ihr bevorrateten Speichervolumens V an standardisierter Milch SM einen kontinuierlichen Volumenstrom Q in den nachgeschalteten Anlagenteilen 4 sicherzustellen. Dabei bleibt die jeweilige tatsächliche Verweilzeit der in die Zwischenspeichervorrichtung 100 eintretenden Flüssigkeitsfraktionen weitgehend undefiniert, wodurch sich das Risiko von Keimwachstum erhöht und/oder die Produktqualität beeinträchtigt wird.

Abhilfe mit Blick auf die vorstehend beschriebene Problematik schafft die an sich bekannte Zwischenspeichervorrichtung 100 mit dem Ausgleichsbehälter 1.0, die nunmehr erfindungsgemäß als eine Entgasungs- und Speichervorrichtung 1* in einer ersten Ausführungsform (Figur 2) ausgeführt ist, deren Ausgleichsbehälter 1.0 in Form eines im Wesentlichen zylinderförmigen Behältermantels 1.1 mit einem unteren Boden 1.2 und einem oberen Boden 1.3 aufgebaut ist. Der untere Boden 1.2 weist einen zentralen Ablaufstutzen 1.4 auf, der von einem von unten in den Ausgleichsbehälter 1.0 eingreifenden Zulaufrohr 1.11* konzentrisch durchdrungen ist. Ein Verteilerschirm 1.12* ist an einem Ende des in den Ausgleichsbehälter 1.0 hinein geführten Zulaufrohres 1.11* mit diesem dergestalt fest verbunden, dass das Zulaufrohr 1.11* über eine erste Austrittsöffnung 1.13* zentrisch im Verteilerschirm 1.12* und oberhalb desselben und bündig mit diesem ausmündet. Das Zulaufrohr 1.11* stellt eine Verbindung mit einem ersten Umfangsringspalt 1.15* her, der zwischen dem Verteilerschirm 1.12* und einer zu letzterem oberhalb beabstandeten und konzentrisch angeordneten, in den flächigen Abmessungen kleineren ersten Prallplatte 1.14* gebildet ist. Um eine Ableitung unterhalb des Verteilerschirmes 1.12* sich ansammelnder Gasblasen nach oben sicherzustellen, sind im Anschlussbereich des Zulaufrohres 1.11* mit dem Verteilerschirm 1.12* in ersterem Entlüftungsbohrungen 1.10* vorgesehen.

Mit einer Niveaumesseinrichtung 1.8 wird ein festes Niveau N* mit entsprechend höhenunveränderlicher Oberfläche in der Entgasungs- und Speichervorrichtung 1* eingestellt. Der Verteilerschirm 1.12* und die mit diesem korrespondierende erste Prallplatte 1.14* sind zweckmäßig kreisförmig und in Form eines Schirmes ausgeführt; ihre axiale Beabstandung erfolgt über wenigstens zwei Abstandhalter 1.5. Das feste Niveau N* begrenzt ein festes Speichervolumen V*, welches im in Frage kommenden Bereich des Behältermantels 1.1 in Verbindung mit dem unteren Boden 1.2 gebildet wird. Die Entgasungs- und Speichervorrichtung 1* verfügt weiterhin über ein Kopfloch 1.9, einen Überlauf 1.6 sowie über wenigstens eine Sprühkopfreinigung 1.7, der von außerhalb der Entgasungs- und Speichervorrichtung 1* Reinigungsmittel R zugeführt wird.

Der Verteilerschirm 1.12* erstreckt sich quer zur Längsachse der Entgasungs- und Speichervorrichtung 1* anfangs waagerecht und anschließend auf radialem Weg geringfügig abfallend und er endet außenseits auf gleicher oder annähernd gleicher Höhe mit dem das Speichervolumen V* in der Entgasungs- und Speichervorrichtung 1* abbildenden festen Niveau N*. Dabei besitzt der äußere Umfangsrand des Verteilerschirmes 1.12* in einer bevorzugten Ausführungsform allseits einen radialen Abstand von dem Behältermantel 1.1.

Standardisierte Milch SM wird dem ersten Zulaufrohr 1.11* an einem Eintritt E zugeführt, der mit dem sechsten Leitungsabschnitt 15 verbunden ist. Sie verlässt das Zulaufrohr 1.11* über die erste Austrittsöffnung 1.13*, wird dort von der ersten Prallplatte 1.14* umgelenkt und in Form einer Filmströmung F über den ersten Umfangsringspalt 1.15* sternförmig, radial gesehen, von innen nach außen auf den Verteilerschirm 1.12* aufgebracht. In dieser Filmströmung F können sich Gasbeimengungen infolge des Auftriebs leicht abscheiden. Die entgaste Filmströmung F wird auf gleicher oder annähernd gleicher Höhe auf einen großen Teil des festen Niveaus N*, in radialer Richtung gesehen, von innen nach außen behutsam aufgeschichtet. Im festen Speichervolumen V* wird eine entgegen einem Gasblasenauftrieb orientierte, über den Querschnitt des festen Speichervolumens V* annähernd gleichverteilte Kolbenströmung K erzeugt, wobei ein fester Volumenstrom Q* dem festen Speichervolumen V* über den Ablaufstutzen 1.4 an einem Austritt A, der mit dem siebten Leitungsabschnitt 16 verbunden ist, entnommen wird.

Die über den ersten Verteilerschirm 1.12* in Form der Filmströmung F auf das feste Niveau N* aufgeschichteten Flüssigkeitsfraktionen verweilen rechnerisch mit einer festen mittleren Verweilzeit, τ*** = V*/Q* in der Entgasungs- und Speichervorrichtung 1*, wobei diese feste mittlere Verweilzeit τ* um so mehr der tatsächlichen Verweilzeit der Flüssigkeitsfraktionen entspricht, je mehr es gelingt, eine über den gesamten Querschnitt des festen Speichervolumens V* gleichverteilte Kolbenströmung K zu erzeugen. Die Ausbildung der vorgenannten Kolbenströmung K wird begünstigt, wenn der Behältermantel 1.1 des Ausgleichsbehälters 1.0 rohrförmig ausgeführt ist. Eine diesbezügliche Kolbenströmung K wird auch bereits dadurch begünstigt, wenn das feste Speichervolumen V* zylinderförmig gestaltet und mit einer Höhe ausgeführt ist, die größer als ein Durchmesser des Speichervolumens V* ist. Gemäß einer bevorzugten Ausführungsform wird dabei die Höhe wenigstens zweifach größer als der Durchmesser ausgeführt.

Die vorliegende Erfindung bildet die an sich bekannte Zwischenspeichervorrichtung 100 mit dem Ausgleichsbehälter 1.0 darüber hinaus in einer Entgasungs- und Speichervorrichtung 1 gemäß einer zweiten Ausführungsform aus (Figur 3), die hinsichtlich der äußeren Geometrie des Ausgleichsbehälters 1.0, eines Überlaufes 1.6, eines Kopfloches 1.9, einer Sprühkopfreinigung 1.7 sowie einer Niveaumesseinrichtung 1.8 identisch zur Entgasungs- und Speichervorrichtung 1* in der ersten Ausführungsform ausgebildet sein kann.

In dieser erfindungsgemäßen zweiten Ausführungsform ist ein Verteilerschirm 1.12 an einer Oberseite eines Schwimmerkörpers 1.16 ausgebildet, der durch seinen Auftrieb in einem variablen Speichervolumen V getragen wird, wobei der Schwimmerkörper 1.16 koaxial von einem mit dem sechsten Leitungsabschnitt 15 verbundenen Zulaufrohr 1.11 durchdrungen und axial verschieblich auf letzterem radial gelagert ist. Oberhalb des Verteilerschirmes 1.12 ist über Abstandhalter 1.5 eine zweite Prallplatte 1.14 angeordnet, wobei zwischen dem zweiten Verteilerschirm 1.12 und der zweiten Prallplatte 1.14 ein zweiter Umfangsringspalt 1.15 ausgebildet ist. Über letzteren wird die im Zusammenhang mit der Entgasungs- und Speichervorrichtung 1* der ersten Art bereits beschriebene Filmströmung F generiert und auf den Verteilerschirm 1.12 in der vorstehend beschriebenen Weise ausgebracht.

In Strömungsrichtung gesehen ist vor einer endseitigen zweiten Austrittsöffnung 1.13 des Zulaufrohres 1.11 ein mit diesem fest verbundener Deckel 1.11 a angeordnet, der in einem zwischen ihm und dem stirnseitigen Ende des Zulaufrohres 1.11 gebildeten Austrittsringspalt 1.11 b die Strömung zur Seite hin umlenkt. Da weiterhin das Zulaufrohr 1.11 in einem an der Oberseite des Schwimmerkörpers 1.16 unmittelbar oder mittelbar angeordneten zylinderförmigen Gehäuse 1.16a endet, wird zwischen diesem Gehäuse 1.16a und der äußeren Mantelfläche des Zulaufrohres 1.11 ein erster Ringkanal 1.17 gebildet, in dem die vorstehend erwähnte, in dem Austrittsringspalt 1.11 b umgelenkte Strömung nach unten geführt wird. Das auch nach unten in den Schwimmerkörper 1.16 eingreifende Gehäuse 1.16a bildet außenseits mit letzterem einen zweiten Ringkanal 1.18, in dem nunmehr die vorgenannte Strömung, die an der unteren Begrenzung des Schwimmerkörpers 1.16 erneut umgelenkt wurde, nach oben geführt wird und am Ende auf die zweite Prallplatte 1.14 trifft. Dort wird die Strömung über den zweiten Umfangsringspalt 1.15 in der vorstehend beschriebenen Weise als Filmströmung F auf den Verteilerschirm 1.12 ausgebracht.

Das Zulaufrohr 1.11 setzt sich jenseits des Deckels 1.11a zunächst in einer Lagerungsstange 1.11c und anschließend in einem in die Umgebung der Entgasungs- und Speichervorrichtung 1 hineingeführten Reinigungsrohr 1.11e fort, dem Reinigungsmittel R zugeführt wird, wobei zwischen Lagerungsstange 1.11 c und Reinigungsrohr 1.11 e ein Sprühkopf 1.11d angeordnet ist. Letzterer befindet sich in dem Gehäuse 1.16a, in dem auch eine erste Lagerstelle 1.16b zur axial verschieblichen, radialen Lagerung des Schwimmerkörpers 1.16 auf dem Zulaufrohr 1.11 vorgesehen ist, und zwar oberhalb der ersten Lagerstelle 1.16b. Eine zweite Lagerstelle 1.16c wird zwischen der äußeren Mantelfläche des Zulaufrohres 1.11 und dem unteren Ende des Schwimmerkörpers 1.16 gebildet.

Das in der Entgasungs- und Speichervorrichtung 1 über die nicht dargestellte Niveaumesseinrichtung 1.8 eingestellte variable Speichervolumen V wird über ein entsprechendes, höhenveränderliches Niveau (Oberfläche) N nach oben begrenzt. Dieses Niveau N trägt den Schwimmerkörper 1.16 durch dessen Auftrieb, und der Schwimmerkörper 1.16 bildet demnach über seine jeweils zugeordnete Höhenlage dieses Niveau N ab. Die in der Entgasungs- und Speichervorrichtung 1 jeweils realisierte veränderliche mittlere Verweilzeit τ der durchgesetzten Flüssigkeitsfraktionen bestimmt sich aus dem jeweiligen variablen Speichervolumen V in Verbindung mit einem jeweils im Austritt A bzw. in dem mit diesem verbundenen siebten Leitungsabschnitt 16 vorliegenden variablen Volumenstrom Q nach der Beziehung τ = V/Q.

Da der Schwimmerkörper 1.16 an seiner Oberseite den Verteilerschirm 1.12 ausbildet und trägt, ist zu jedem Zeitpunkt sichergestellt, dass die Filmströmung F auf gleicher oder annähernd gleicher Höhe mit der höhenveränderlichen Oberfläche N des variablen Speichervolumens V generiert und dort auf einen großen Teil dieser Oberfläche N, in radialer Richtung gesehen, von innen nach außen aufgeschichtet wird.

Hinsichtlich der übrigen Wirkmechanismen (Erzeugung und Geometrie der Filmströmung F; Erzeugung einer annähernd gleichverteilten Kolbenströmung K; Entnahme des variablen Volumenstromes Q aus dem variablen Speichervolumen V) wird auf die Ausführungen im Zusammenhang mit der Entgasung und Speichervorrichtung 1* in der ersten Ausführungsform verwiesen.

Wird der Schwimmerkörper 1.16 höhenunveränderlich festgelegt, dann arbeitet die Entgasungs- und Speichervorrichtung 1 der zweiten Ausführungsform mit festem Niveau N* und festem Speichervolumen V* und ist dann funktional identisch mit der Entgasungs- und Speichervorrichtung 1* in der ersten Ausführungsform.

### BEZUGSZEICHENLISTE DER VERWENDETEN ABKÜRZUNGEN

| **Figur 1** | **(Stand der Technik)** |
|---|---|
| 100 | Zwischenspeichervorrichtung |
| | |
| 1.0 | Ausgleichsbehälter |
| 2 | Anordnung mit Separator |
| 2a | Separator |
| 2b | Schlammbehälter |
| 2c | Einrichtung zur Milchfettstandardisierung |
| 3 | vorgeschaltete Anlagenteile |
| | (erster Wärmeaustauscher der Vorwärmzone einer UHT Anlage) |
| 4 | nachgeschaltete Anlagenteile |
| | (erster Wärmeaustauscher der Vorwärmzone einer UHT Anlage) |
| 5 | vorgeschaltete Fördereinrichtung |
| 6 | nachgeschaltete Fördereinrichtung |
| 7 | Umschaltventil |
| 8 | Absperrventil |
| 9 | vorgeordneter Leitungsabschnitt |
| 10 | erster Leitungsabschnitt |
| 11 | zweiter Leitungsabschnitt |
| 12 | dritter Leitungsabschnitt |
| 13 | vierter Leitungsabschnitt |
| 14 | fünfter Leitungsabschnitt |
| 15 | sechster Leitungsabschnitt |
| 16 | siebter Leitungsabschnitt |
| 17 | nachgeordneter Leitungsabschnitt |
| | |
| MM | Magermilch |
| P | Zwischenprodukt (UHT-Milch) |
| Q | variabler Volumenstrom |
| RA | Rahm |
| RM | Rohmilch |
| SM | standardisierte Milch |
| V | variables Speichervolumen |

| **Figur 2** | |
|---|---|
| 1* | Entgasungs- und Speichervorrichtung (erste Ausführungsform) |
| | |
| 1.0 | Ausgleichsbehälter |
| 1.1 | Behältermantel |
| 1.2 | unterer Boden |
| 1.3 | oberer Boden |
| 1.4 | Ablaufstutzen |
| 1.5 | Abstandhalter |
| 1.6 | Überlauf |
| 1.7 | Sprühkopfreinigung |
| 1.8 | Niveaumesseinrichtung |
| 1.9 | Kopfloch |
| | |
| 1.10* | Entlüftungsbohrungen |
| 1.11* | Zulaufrohr |
| 1.12* | Verteilerschirm |
| 1.13* | erste Austrittsöffnung |
| 1.14* | erste Prallplatte |
| 1.15* | erster Umfangsringspalt |
| | |
| A | Austritt |
| E | Eintritt |
| F | Filmströmung |
| K | Kolbenströmung |
| N* | festes Niveau (höhenunveränderliche Oberfläche) |
| Q* | fester Volumenstrom |
| R | Reinigungsmittel |
| V* | festes Speichervolumen |
| | |
| τ* | feste mittlere Verweilzeit (τ* = V*/Q*) |

| **Figur 3** | (Änderungen gegenüber **Figur 2**) |
|---|---|
| 1 | Entgasungs- und Speichervorrichtung (zweite Ausführungsform) |
| | |
| 1.11 | Zulaufrohr |
| 1.11a | Deckel |
| 1.11b | Austrittsringspalt |
| 1.11c | Lagerungsstange |
| 1.11d | Sprühkopf |
| 1.11e | Reinigungsrohr |
| | |
| 1.12 | Verteilerschirm |
| 1.13 | zweite Austrittsöffnung |
| 1.14 | zweite Prallplatte |
| 1.15 | zweiter Umfangsringspalt |
| | |
| 1.16 | Schwimmerkörper |
| 1.16a | Gehäuse |
| 1.16b | erste Lagerstelle |
| 1.16c | zweiter Lagerstelle |
| | |
| 1.17 | erster Ringkanal |
| 1.18 | zweiter Ringkanal |
| | |
| N | höhenveränderliches Niveau (höhenveränderliche Oberfläche) |
| | |
| τ | veränderliche mittlere Verweilzeit (τ = V/Q) |

## Patentansprüche

1. Verfahren zur Entgasung und Aufrechterhaltung eines kontinuierlichen Volumenstromes (Q; Q*) einer zu behandelnden Milch in einer Ultra-Hoch-Temperatur (UHT) Anlage mit indirekter Erhitzung und integriertem Separator (2a) für die Milchfettstandardisierung bei Bereitstellung von Rohmilch (RM) zur Behandlung in der UHT-Anlage und mit einer Zwischenspeicherung (100) einer eine Anordnung mit Separator (2) verlassenden standardisierten Milch (SM), **dadurch gekennzeichnet,**
• **dass** bei stationärer Separierung der Volumenstrom (Q; Q*) in einer der Anordnung mit Separator (2) nachgeordneten Entgasungs- und Speichervorrichtung (1; 1*) fortdauernd eine Behandlung nach den folgenden Schritten a) bis e) erfährt, wobei
a) der Volumenstrom (Q; Q*) der Entgasungs- und Speichervorrichtung (1; 1*)vertikal, von unten nach oben, zugeführt wird,
b) anschließend mit dem Volumenstrom (Q; Q*) eine punktsymmetrisch, radial gesehen, von innen nach außen zunächst sich waagerecht und anschließend auf radialem Weg geringfügig abfallend ausbreitende Filmströmung (F) erzeugt wird,
c) die Generierung der Filmströmung (F) auf gleicher oder annähernd gleicher Höhe mit einer Oberfläche (N; N*) eines Speichervolumens (V; V*) in der Entgasungs- und Speichervorrichtung (1; 1*) erfolgt und die Filmströmung (F) auf einen großen Teil dieser Oberfläche (N; N*), in radialer Richtung gesehen, von innen nach außen aufgeschichtet wird,
d) im Speichervolumen (V; V*) eine entgegen einem Gasblasenauftrieb orientierte, über den Querschnitt des Speichervolumens (V; V*) annähernd gleichverteilte Kolbenströmung (K) erzeugt wird und
e) der Volumenstrom (Q; Q*) dem Speichervolumen (V; V*) am unteren Ende zentral und gleichgerichtet zur Kolbenströmung (K) entnommen wird,
• und **dass** bei Unterbrechung der Separierung der Volumenstrom (Q; Q*) aus dem Speichervolumen (V; V*) entnommen wird.

2. Verfahren nach Anspruch 1,
**dadurch gekennzeichnet,**
**dass** das Speichervolumen ein festes, vorgegebenes Speichervolumen (V*) mit höhenunveränderlicher oder annähernd höhenunveränderlicher Oberfläche (N*) ist.

3. Verfahren nach Anspruch 1,
**dadurch gekennzeichnet,**
**dass** das Speichervolumen ein variables, jeweils vorgegebenes Speichervolumen (V) mit entsprechend höhenveränderlicher Oberfläche (N) ist.

4. Verfahren nach einem der Ansprüche 1 bis 3,
**dadurch gekennzeichnet,**
**dass** das das jeweilige Speichervolumen (V; V*) abbildende Niveau (N; N*) erfasst und durch Steuerung eingestellt und aufrechterhalten wird.

5. Verfahren nach einem der Ansprüche 1 bis 4,
**dadurch gekennzeichnet,**
**dass** nach einer Wiederaufnahme der Separierung im Anschluss an deren ablaufbedingte Unterbrechung eine Befüllung auf das vorgegebene feste Speichervolumen (V*) oder das vorgegebene variable Speichervolumen (V) erfolgt.

6. Vorrichtung zur Entgasung und Aufrechterhaltung eines kontinuierlichen Volumenstromes (Q; Q*) einer zu behandelnden Milch in einer Ultra-Hoch-Temperatur (UHT) Anlage mit indirekter Erhitzung und integriertem Separator (2a) für die Milchfettstandardisierung bei Bereitstellung von Rohmilch (RM) zur Behandlung in der UHT-Anlage und mit einer einer Anordnung mit Separator (2) nachgeordneten Zwischenspeichervorrichtung (100),
**dadurch gekennzeichnet,**
• **dass** die Zwischenspeichervorrichtung (100) als eine Entgasungs- und Speichervorrichtung (1*; 1) mit einem Ausgleichsbehälter (1.0) ausgebildet ist, der an seinem unteren Ende einen zentralen Ablaufstutzen (1.4) aufweist, welcher von einem von unten in den Ausgleichsbehälter (1.0) eingreifenden Zulaufrohr (1.11*; 1.11) konzentrisch durchdrungen ist,
• **dass** das Zulaufrohr (1.11 *; 1.11) eine Verbindung mit einem Umfangsringspalt (1.15*; 1.15) herstellt, der zwischen einem Verteilerschirm (1.12*; 1.12) und einer zu letzterem oberhalb beabstandeten und konzentrisch angeordneten, in den flächigen Abmessungen kleineren Prallplatte (1.14*; 1,14) gebildet ist,
• und **dass** sich der Verteilerschirm (1.12*; 1.12) quer zur Längsachse der Entgasungs- und Speichervorrichtung (1*; 1) waagerecht und anschließend auf radialem Weg geringfügig abfallend erstreckt und außenseits auf gleicher oder annähernd auf gleicher Höhe mit einem ein Speichervolumen (V*; V) in der Entgasungs- und Speichervorrichtung (1*; 1) abbildenden Niveau (N*; N) endet.

7. Vorrichtung nach Anspruch 6,
**dadurch gekennzeichnet,**
**dass** der Verteilerschirm (1.12*; 1.12) umfangsseits mit einem radialen Abstand von einem Behältermantel (1.1) des Ausgleichsbehälters (1.0) endet.

8. Vorrichtung nach Anspruch 6 oder 7,
**dadurch gekennzeichnet,**
**dass** der Verteilerschirm (1.12*) an einem Ende des in den Ausgleichsbehälter (1.0) hineingeführten Zulaufrohres (1.11*) mit diesem dergestalt fest verbunden ist, dass das Zulaufrohr (1.11*) zentrisch im Verteilerschirm (1.12*) und oberhalb desselben und bündig mit diesem ausmündet.

9. Vorrichtung nach Anspruch 6 oder 7,
**dadurch gekennzeichnet,**
**dass** der Verteilerschirm (1.12) an einer Oberseite eines Schwimmerkörpers (1.16) ausgebildet ist, der durch seinen Auftrieb in dem variablen Speichervolumen (V) getragen wird, dass der Schwimmerkörper (1.16) koaxial von dem Zulaufrohr (1.11) durchdrungen und dass er axial verschieblich auf letzterem radial gelagert ist.

10. Vorrichtung nach Anspruch 9,
**dadurch gekennzeichnet,**
**dass** das Zulaufrohr (1.11) in einem an der Oberseite des Schwimmerkörpers (1.16) unmittelbar oder mittelbar angeordneten Gehäuse (1.16a) endet, dort wenigstens eine erste Lagerstelle (1.16b) für den Schwimmerkörper (1.16) aufweist, und dass in dem Gehäuse (1.16) ein Sprühkopf (1.11 c) angeordnet ist, der mit einem aus der Umgebung der Entgasungs- und Speichervorrichtung (1) herangeführten Reinigungsrohr (1.11 e) verbunden ist.

11. Vorrichtung nach einem der Ansprüche 6 bis 10,
**dadurch gekennzeichnet,**
**dass** der Verteilerschirm (1.12*; 1.12) und die jeweils korrespondierende Prallplatte (1.14*; 1.14) kreisförmig und in Form eines Schirmes ausgeführt sind.

12. Vorrichtung nach einem der Ansprüche 6 bis 11,
**dadurch gekennzeichnet,**
**dass** der Behältermantel (1.1) des Ausgleichsbehälters (1.0) rohrförmig ausgeführt ist.

13. Vorrichtung nach einem der Ansprüche 6 bis 11,
**dadurch gekennzeichnet,**
**dass** das Speichervolumen (V*; V) zylinderförmig gestaltet und mit einer Höhe ausgeführt ist, die größer als ein Durchmesser des
Speichervolumens (V*; V) ist.

14. Vorrichtung nach Anspruch 13,
**dadurch gekennzeichnet,**
**dass** die Höhe wenigstens zweifach größer als der Durchmesser ausgeführt ist.

15. Vorrichtung nach einem der Ansprüche 6 bis 14,
**dadurch gekennzeichnet, dass** in der Entgasungs- und Speichervorrichtung (1*; 1) eine Niveaumesseinrichtung (1.8) angeordnet ist.

## Claims

1. Method for degassing and maintaining a continuous volume flow (Q; Q*) of milk to be treated in an ultra high temperature (UHT) installation comprising indirect heating and an integrated separator (2a) for standardising the milk fat when raw milk (RM) is provided for treatment in the UHT installation and comprising an intermediate storage device (100) for standardised milk (SM) exiting an arrangement comprising a separator (2), **characterised in that**
• during stationary separation, the volume flow (Q; Q*) continuously undergoes a treatment in a degassing and storage device (1; 1 *) arranged downstream of the arrangement comprising the separator (2), according to the following steps a) to e),
a) the volume flow (Q; Q*) being supplied vertically, from bottom to top, to the degassing and storage device (1; 1 *),
b) subsequently, a film flow (F) being produced with the volume flow (Q; Q*) which widens point-symmetrically, when viewed radially, initially horizontally from the inside to the outside and subsequently slightly dropping away on the radial path,
c) the film flow (F) being produced at the same height or approximately the same height as a surface (N; N*) of a storage volume (V; V*) in the degassing and storage device (1; 1 *) and the film flow (F) being built up in layers from the inside to the outside over a large part of this surface (N; N*), viewed in the radial direction,
d) in the storage volume (V; V*) an approximately uniformly distributed piston flow (K) being produced which is oriented counter to a gas bubble lift, over the cross section of the storage volume (V; V*), and
e) the volume flow (Q; Q*) being removed from the storage volume (V; V*) at the lower end, centrally and in the same direction as the piston flow (K).
• and when interrupting the separation, the volume flow (Q; Q*) is removed from the storage volume (V; V*).

2. Method according to Claim 1,
**characterised in that**
the storage volume is a fixed, predetermined storage volume (V*) with a surface (N*) which is not height-adjustable or approximately not height-adjustable.

3. Method according to Claim 1,
**characterised in that**
the storage volume is a variable, respectively predetermined storage volume (V) with a corresponding height-adjustable surface (N).

4. Method according to one of Claims 1 to 3,
**characterised in that**
the level (N; N*) representing the respective storage volume (V; V*) is detected and set and maintained by a control system.

5. Method according to one of Claims 1 to 4,
**characterised in that**
after resuming the separation after the interruption, as a result of the outflow, filling is carried out to the predetermined fixed storage volume (V*) or the predetermined variable storage volume (V).

6. Device for degassing and maintaining a continuous volume flow (Q; Q*) of milk to be treated in an ultra high temperature (UHT) installation comprising indirect heating and an integrated separator (2a) for standardising the milk fat when raw milk (RM) is provided for treatment in the UHT installation and comprising an intermediate storage device (100) arranged downstream of an arrangement comprising a separator (2),
**characterised in that**
• the intermediate storage device (100) is configured as a degassing and storage device (1*; 1) comprising a compensation tank (1.0) which at its lower end has a central discharge pipe (1.4) which is concentrically penetrated by a supply pipe (1.11*; 1.11) engaging with the compensation tank (1.0) from below,
• the supply pipe (1.11*; 1.11) creates a connection with a peripheral annular gap (1.15*; 1.15) which is formed between a distribution head (1.12*; 1.12) and a deflector plate (1.14*; 1.14) which is smaller in terms of two-dimensional measurements, arranged at a distance above said distribution head and concentrically thereto,
• and the distribution head (1.12*; 1.12) extends horizontally, transversely to the longitudinal axis of the degassing and storage device (1*; 1) and subsequently slightly falling away on the radial path and externally terminates at the same or approximately the same height as a level (N*; N) representing a storage volume (V*; V) in the degassing and storage device (1*; 1).

7. Device according to Claim 6,
**characterised in that**
on the periphery the distribution head (1.12*; 1.12) terminates at a radial distance from a container casing (1.1) of the compensation tank (1.0).

8. Device according to Claim 6 or 7,
**characterised in that**
the distribution head (1.12*) at one end of the supply pipe (1.11*) inserted into the compensation tank (1.0) is fixedly connected thereto such that the supply pipe (1.11*) discharges centrally in the distribution head (1.12*) and above said distribution head and flush thereto.

9. Device according to Claim 6 or 7,
**characterised in that**
the distribution head (1.12) is configured on an upper face of a floating body (1.16) which is carried in the variable storage volume (V) by its buoyancy, **in that** the floating body (1.16) is coaxially penetrated by the supply pipe (1.11) and **in that** it is radially mounted axially displaceably thereon.

10. Device according to Claim 9,
**characterised in that**
the supply pipe (1.11) terminates in a housing (1.16a) arranged directly or indirectly on the upper face of the floating body (1.16), comprises at least one first bearing (1.16b) there for the floating body (1.16) and **in that** in the housing (1.16) a spray head (1.11c) is arranged which is connected to a cleaning pipe (1.11e) introduced from the surroundings of the degassing and storage device (1).

11. Device according to one of Claims 6 to 10,
**characterised in that**
the distribution head (1.12*; 1.12) and the respective corresponding deflector plate (1.14*; 1.14) are circular and of umbrella-shaped design.

12. Device according to one of Claims 6 to 11,
**characterised in that**
the container casing (1.1) of the compensation tank (1.0) is of tubular design.

13. Device according to one of Claims 6 to 11,
**characterised in that**
the storage volume (V*; V) is of cylindrical design and is designed with a height which is greater than a diameter of the storage volume (V*; V).

14. Device according to Claim 13,
**characterised in that**
the height is designed to be at least twice as great as the diameter.

15. Device according to one of Claims 6 to 14,
**characterised in that** a level measuring device (1.8) is arranged in the degassing and storage device (1*; 1).

## Revendications

1. Procédé pour dégazer et maintenir un débit volumétrique (Q ; Q*) continu d'un lait à traiter dans une installation à ultra haute température (UHT) à chauffage indirect et
séparateur intégré (2a) pour la standardisation en matière grasse du lait lors de la mise à disposition de lait cru (RM) pour le traitement dans l'installation UHT et avec un stockage intermédiaire (100) d'un lait standardisé (SM) sortant d'un arrangement avec séparateur (2), **caractérisé en ce que**
• lors de la séparation stationnaire, le débit volumétrique (Q ; Q*) est soumis en continu à un traitement selon les étapes suivantes a) à e) dans un dispositif pour dégazer et stocker (1 ; 1 *) en aval de l'arrangement avec séparateur (2), dans lequel
a) le débit volumétrique (Q ; Q*) du dispositif pour dégazer et stocker (1 ; 1*) est alimenté verticalement de bas en haut,
b) est ensuite généré avec le débit volumétrique (Q ; Q*) un écoulement pelliculaire (F) se propageant de manière centro-symétrique d'un point de vue radial de l'intérieur vers l'extérieur, tout d'abord horizontalement puis légèrement en pente sur le chemin radial,
c) la génération de l'écoulement pelliculaire (F) est effectuée à la même hauteur ou approximativement à la même hauteur qu'une surface (N ; N*) d'un volume de stockage (V ; V*) dans le dispositif pour dégazer et stocker (1;1*) et l'écoulement pelliculaire (F) est amoncelé sur une grande partie de cette surface (N ; N*) vu dans une direction radiale de l'intérieur vers l'extérieur,
d) dans le volume de stockage (V ; V*) est généré un écoulement piston (K) orienté à l'encontre d'une ascension de bulles de gaz, réparti approximativement uniformément sur la section transversale du volume de stockage (V ; V*) et
e) le débit volumétrique (Q ; Q*) est prélevé du volume de stockage (V ; V*) à l'extrémité inférieure de manière centrale et dans la même direction que l'écoulement piston (K),
• et **en ce que** lors de l'interruption de la séparation le débit volumétrique (Q ; Q*) est prélevé du volume de stockage (V ; V*).

2. Procédé selon la revendication 1,
**caractérisé en ce que,**
le volume de stockage est un volume de stockage (V*) fixe prédéterminé avec une surface (N*) dont la hauteur est invariable ou approximativement invariable.

3. Procédé selon la revendication 1,
**caractérisé en ce que**
le volume de stockage est un volume de stockage (V) variable, respectivement prédéterminé avec une surface (N) dont la hauteur est respectivement variable.

4. Procédé selon l'une des revendications 1 à 3,
**caractérisé en ce que**
le niveau (N ; N*) formant le volume de stockage (V ; V*) respectif est détecté et ajusté et maintenu par une commande.

5. Procédé selon l'une des revendications 1 à 4,
**caractérisé en ce que**
après une reprise de la séparation à la suite de son interruption consécutive à l'écoulement, un remplissage est effectué jusqu'au volume de stockage (V*) fixe prédéterminé ou au volume de stockage (V) variable prédéterminé.

6. Dispositif pour dégazer et maintenir un débit volumétrique (Q ; Q*) continu d'un lait à traiter dans une installation à ultra haute température (UHT) à chauffage indirect et séparateur intégré (2a) pour la standardisation en matière grasse du lait lors de la mise à disposition de lait cru (RM) pour le traitement dans l'installation UHT et
avec un dispositif de stockage intermédiaire (100) en aval d'un arrangement avec séparateur (2), **caractérisé en ce que**
• le dispositif de stockage intermédiaire (100) est constitué en tant que dispositif pour dégazer et stocker (1* ; 1) avec un réservoir de compensation (1.0) qui présente à son extrémité inférieure une tubulure d'écoulement (1.4) centrale qui est pénétrée de manière concentrique par un tuyau d'alimentation (1.11* ; 1.11) engrenant par le bas dans le réservoir de compensation (1.0),
• le tuyau d'alimentation (1.11*; 1.11) établit une connexion avec un interstice annulaire périphérique (1.15* ; 1.15) qui est formé entre un écran répartiteur (1.12* ; 1.12) et une plaque déflectrice (1.14* ; 1.14) plus petite en ce qui concerne ses dimensions de surface, espacée au-dessus dudit écran répartiteur et disposée de manière concentrique par rapport à celui-ci,
• et l'écran répartiteur (1.12* ; 1.12) s'étend transversalement par rapport à l'axe longitudinal du dispositif pour dégazer et stocker (1* ; 1) horizontalement puis légèrement en pente sur le chemin radial et se termine côté extérieur à la même hauteur ou approximativement à la même hauteur qu'un niveau (N* ; N) formant un volume de stockage (V* ;V) dans le dispositif pour dégazer et stocker (1* ; 1).

7. Dispositif selon la revendication 6,
**caractérisé en ce que**
l'écran répartiteur (1.12* ; 1.12) se termine du côté périphérique avec un écart radial par rapport à une paroi de réservoir (1.1) du réservoir de compensation (1.0).

8. Dispositif selon la revendication 6 ou 7,
**caractérisé en ce que**
l'écran répartiteur (1.12*) est raccordé à une extrémité du tuyau d'alimentation (1.11*) introduit dans le réservoir de compensation (1.0) avec celui-ci de telle manière que le tuyau d'alimentation (1.11*) débouche de manière centrale par rapport à l'écran répartiteur (1.12*) et au-dessus de celui-ci et au ras de celui-ci.

9. Dispositif selon la revendication 6 ou 7,
**caractérisé en ce que**
l'écran répartiteur (1.12) est constitué sur une face supérieure d'un corps de flotteur (1.16) qui est porté dans le volume de stockage variable (V) par sa flottabilité, le corps de flotteur (1.16) est pénétré de manière coaxiale par le tuyau d'alimentation (1.11) et est logé radialement sur celui-ci de manière déplaçable axialement.

10. Dispositif selon la revendication 9,
**caractérisé en ce que**
le tuyau d'alimentation (1.11) se termine dans une enveloppe (1.16a) disposée directement ou indirectement sur la face supérieure du corps de flotteur (1.16), y présente au moins un premier point d'appui (1.16b) pour le corps de flotteur (1.16) et une tête de pulvérisation (1.11c), qui est raccordée à un tuyau de nettoyage (1.11e) amené depuis l'environnement du dispositif pour dégazer et stocker (1), est disposée dans l'enveloppe (1.16).

11. Dispositif selon l'une des revendications 6 à 10,
**caractérisé en ce que**
l'écran répartiteur (1.12* ; 1.12) et la plaque déflectrice (1.14* ; 1.14) respectivement correspondante sont réalisés de forme circulaire et sous la forme d'un écran.

12. Dispositif selon l'une des revendications 6 à 11,
**caractérisé en ce que**
la paroi de réservoir (1.1) du réservoir de compensation (1.0) est réalisée de forme tubulaire.

13. Dispositif selon l'une des revendications 6 à 11,
**caractérisé en ce que**
le volume de stockage (V* ; V) est conçu de forme cylindrique et est réalisé à une hauteur qui est supérieure à un diamètre du volume de stockage (V* ; V).

14. Dispositif selon la revendication 13,
**caractérisé en ce que**
la hauteur est réalisée de manière au moins deux fois plus grande que le diamètre.

15. Dispositif selon l'une des revendications 6 à 14,
**caractérisé en ce qu'**un dispositif de mesure de niveau (1.8) est disposé dans le dispositif pour dégazer et stocker (1* ; 1).
